# EUROPÄISCHE PATENTANMELDUNG

(11) **EP 4 575 302 A1**
(43) Veröffentlichungstag der Anmeldung: **25.06.2025**
(21) Anmeldenummer: 24221584.6
(22) Anmeldetag: 19.12.2024
(51) Int. Cl.: F17C 11/00

(54) **WASSERSTOFF-SPEICHERZELLE ZUM SPEICHERN VON WASSERSTOFF IN EINEM METALLHYDRID UND WASSERSTOFF-SPEICHEREINHEIT MIT MEHREREN WASSERSTOFF-SPEICHERZELLEN**

(30) Priorität: 22.12.2023 DE 102023136553
(71) Anmelder: Hochschule RheinMain, 65197 Wiesbaden (DE)
(72) Erfinder: SCHEPPAT, Birgit, Wiesbaden (DE); WERNER, Matthias Torsten, Wiesbaden (DE); TRAUTMANNSHEIMER, Uwe, Wiesbaden (DE)
(74) Vertreter: Durm Patentanwälte PartG mbB

(57) **Zusammenfassung**

Eine Wasserstoff-Speicherzelle (10) zum Speichern von Wasserstoff in einem Metallhydrid umfasst einen Grundkörper (12) mit einem nach oben offenen Aufnahmeraum (14), eine Deckschicht (28) zum Verschließen des Aufnahmeraums (14), eine Metallhydridschicht (16) im Aufnahmeraum (14) und ein als Anpressplatte ausgebildetes Anpresselement (18) mit Kontakt zu der Metallhydridschicht (16). Das Anpresselement (18) übt eine Kraftwirkung auf die Metallhydridschicht (16) aus. Ein im Aufnahmeraum (14) gebildeter Gasraum (26) zur Aufnahme von Wasserstoff ist durch das Anpresselement (18) von der Metallhydridschicht (16) getrennt. Das Anpresselement (18) ist gasdurchlässig, sodass ein Gasstrom zwischen Gasraum und Metallhydridschicht möglich ist. Eine Wasserstoff-Speichereinheit (50) zum Speichern von gasförmigem Wasserstoff hat mehrere Wasserstoff-Speicherzellen (10), die fluidisch derart zusammengeschaltet sind, dass ein Gasaustausch zwischen den Speicherzellen (10) möglich ist.

## Beschreibung

Die vorliegende Erfindung betrifft Wasserstoff-Speicherzelle zum Speichern von Wasserstoff und eine Speichereinheit, die aus mehreren Wasserstoff-Speicherzellen zusammengesetzt wird.

Der Aufbau typischer Wasserstoffspeicher, auch der von Metallhydridspeichern, besteht in der Regel aus einem zylindrischen Drucktank. Derzeitige Wasserstoffdruckspeicher bestehen aus Stahl und/oder Kompositwerkstoffen und sind von zylindrischer Form, die im Verhältnis zum umbauten Volumen erheblich Nachteile aufweisen. Bei Metallhydridspeichern sind Kühlwendeln zur Temperierung des Metallhydrids vorgesehen, um die im Metallhydrid beim Be- und Entladen mit Wasserstoff entstehenden Temperaturen schnell abzuleiten. Dies führt jedoch zu einer geringen Packungsdichte intern und extern, bedingt durch den Platzbedarf der Kühlwendel im Speichermaterial und der runden Bauform. Zeitgleich ist die kühlende Kontaktfläche zum Metallhydrid auf die Oberfläche der Kühlwendel beschränkt.

Der Wärmeaustausch ist bisher die größte Herausforderung bei der Entwicklung von Speichern. Es gibt Ansätze diese Oberfläche zu vergrößern, in dem unterschiedliche wärmeleitende Strukturen zur Wärmeleitung in das Metallhydrid eingebracht werden. Beispielsweise wird der Wärmetausch durch individuelle, auf den jeweiligen Speicher ausgelegte Rohrbündelwärmetauscher realisiert. Der Aufbau dieser Speicher ist in der Praxis sehr komplex und aufwendig und macht eine Skalierbarkeit und eine Massenfertigung schwierig. Die Leistungswerte werden dadurch limitiert. Zudem verringern alle eingebrachten Profile und Strukturen die Menge an Metallhydrid, das eingebracht werden kann.

Es besteht somit ein großer Bedarf, einen verbesserten Wasserstoff-Speicher zu schaffen, der insbesondere eine gute Wärmeableitungsfähigkeit aufweist und der einfach in der Größe skalierbar ist.

Gelöst wird die Aufgabe mit einer Wasserstoff-Speicherzelle mit den Merkmalen des Anspruchs 1 und mit einer Wasserstoff-Speichereinheit mit den Merkmalen des Anspruchs 12.

In einem Aspekt betrifft die vorliegende Erfindung eine Wasserstoff-Speicherzelle zum Speichern von Wasserstoff in einem Metallhydrid, umfassend einen Grundkörper mit einem nach oben offenen Aufnahmeraum; eine Deckschicht zum Verschließen des Aufnahmeraums; eine Metallhydridschicht im Aufnahmeraum; ein als Anpressplatte ausgebildetes Anpresselement mit Kontakt zu der Metallhydridschicht, wobei das Anpresselement eine Kraftwirkung auf die Metallhydridschicht ausübt und im Aufnahmeraum ein Gasraum oder Wasserstoffraum zur Aufnahme von Wasserstoff gebildet ist, wobei der Gasraum oder Wasserstoffraum durch das Anpresselement von der Metallhydridschicht getrennt ist. Die Anpressplatte ist derart gasdurchlässig ausgebildet ist, dass ein vordefinierter Gasstrom zwischen dem Gasraum und der Metallhydridschicht ermöglicht wird.

In einem weiteren Aspekt betrifft die Erfindung eine Wasserstoff-Speichereinheit zum Speichern von gasförmigem Wasserstoff mit mehreren Wasserstoff-Speicherzellen, die fluidisch derart zusammengeschaltet sind, dass eine bevorzugt parallele Gas- und Kühlmittelversorgung der Speicherzellen möglich ist, wobei die Speicherzellen übereinandergestapelt sind. Eine obere und eine untere Endplatte sind Teil der Wasserstoff-Speichereinheit. Die obere Endplatte hat Anschlüsse für Kühlmittel und einen Gasanschluss für Wasserstoff.

Bevorzugte Ausgestaltungen der Erfindung werden in den abhängigen Ansprüchen beschrieben. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Erfindungsgemäß wird in der Wasserstoff-Speicherzelle in einem Metallhydridmaterial gespeichert, die in einer Metallhydridschicht enthalten ist. Der Wasserstoff liegt innerhalb des Metallhydrids nicht gasförmig vor. Dies führt zu einer signifikant höheren volumetrischen Energiedichte von 21,5 kg/m³ bei niedrigen Drücken im Bereich von 5 bar bis 50 bar, bevorzugt bis 30 bar. Dies ermöglicht eine Speicherung des Wasserstoffs direkt aus einer Elektrolyse ohne zwischengeschaltete Komprimierung und bietet den gleichen Energieinhalt wie bei einem vergleichbaren 350 bar Druckgasspeicher. Ein mögliches Metallhydrid wird unter dem Handelsnamen Hydralloy C geführt, es ist ein Niedertemperatur AB₂-Typ. Die Zusammensetzung umfasst Mn (51,8 Gew.-%), Fe (2,9 Gew.-%), Ti+Zr (29,8 Gew.-%), Ti (27 Gew.-%), Zr (2,8 Gew.-%), V+Fe (17 Gew.-%) und V (14,1 Gew.-%). Die Speicherkapazität liegt bei ca. 1,8 Gew.%, d.h. in einem kg Hydralloy C können 18g H2 gespeichert werden. Der größte Vorteil des Materials liegt in der Betriebstemperatur und im Betriebsdruck zwischen 5*10⁵ Pa-27*10⁵ Pa (5-27bar) bei 20°C. Das Metallhydrid lässt sich somit unter Standardbedingungen betreiben. Es gibt auch alternative Metallhydride, die in diesem Speicher eingesetzt werden können, z.B. Fe+Ti oder La+Ni.

Da sich die Metallhydridschicht und das in ihr enthaltene Metallhydrid beim Speichern des Wasserstoffs in der Schicht ausdehnt, wird es durch das Anpresselement bzw. die Anpressplatte und dessen ausgeübte Kraftwirkung in Form gehalten und in den Aufnahmebereich gedrückt. Die Anpressplatte ist trotz ihrer Gasdurchlässigkeit dazu ausgebildet, eine derart große Kraft auf die Metallhydridschicht auszuüben, dass die Wärmeübergangswiderstände zwischen Wasserstoff und Metallhydridschicht reduziert werden. Im Rahmen der Erfindung wurde erkannt, dass sowohl die ausgeübte Kraft als auch die bevorzugt durch Öffnungen oder Löcher realisierte Durchlässigkeit Einfluss auf den Wärmeübergangswiderstand haben und dass dieser insbesondere durch Kräfte von mindestens 100 N reduziert werden kann. Im Rahmen der Erfindung wurde erkannt, dass die Kühlmitteltemperatur erhöht und somit die zuzuführende Kühlleistung einer erfindungsgemäßen Wasserstoff-Speicherzelle erheblich reduziert werden kann, wenn mittels der Anpressplatte eine Kraft auf die Metallhydridschicht ausgeübt wird. Beispielsweise ruft eine ausgeübte Kraft von 400 N eine Einsparung von 12 % in Bezug auf die Kühlleistung hervor.

In einer bevorzugten Ausführungsform weist die Wasserstoff-Speicherzelle ein Kraftelement auf, um die gewünschte Kraft auf die Anpressplatte auszuüben, die dann wiederum die Kraft auf die Metallhydridschicht weiterleitet. Die für eine Wirkung auf die Wärmeübergangswiderstände notwendige, nicht zu vernachlässigende Kraft ist bevorzugt wenigstens 100 N groß. Weiter bevorzugt sind größere Kräfte von wenigstens 200 N, wenigstens 400 N, wenigstens 600 N, wenigstens 800 N, wenigstens 1000 N und darüber. Es hat sich gezeigt, dass eine größere Kraft zu einer größeren Einsparung an Kühlleistung führt. Deshalb sind auch Kräfte von wenigstens 1500 N oder 2000 N bevorzugt.

Die Anpressplatte übt bevorzugt die von dem Kraftelement aufgebrachte Kraft auf die Metallhydridschicht aus. Dabei ist der Gasraum derart gestaltet, dass er der Volumenausdehnung der Metallhydridschicht und dem Verschiebeweg der kraftausübenden Elemente entsprechend variabel ist. Somit kann die Anpressplatte beim Beladen der Speicherzelle in Richtung Gasraum bewegt werden, um den Gasraum entsprechend in seinem Volumen zu variieren.

Das in Form der Anpressplatte realisierte Anpresselement hat den weiteren Vorteil, dass das Metallhydrid auch in loser Form oder als Pulver vorliegen kann. Es kann nicht aus dem Aufnahmeraum hinaus. Sein Volumen kann sich bis zu ca. 30 % vergrößern. Dies hat den Vorteil, dass der Wasserstoffraum (Gasraum) auf der dem Metallhydrid abgewandten Seite sein Volumen gemeinsam mit der Änderung des Volumens des Metallhydrids anpassen kann. Der Wasserstoffraum dient zur Einleitung des Wasserstoffs und zur Verteilung des Wasserstoffs in die Metallhydridschicht. Somit ist auch während des Befüllens oder Entnahme des Wasserstoffs eine gute Verteilung zuverlässig gegeben. Zu dem erfolgt ein verbesserter Wärmeübergang zwischen Metallhydrid bzw. Metallhydridschicht und dem Grundkörper.

Durch die Ausbildung der Wasserstoff-Speicherzelle mit einer Metallhydridschicht wird eine große Fläche gebildet, über die Wärme abgegeben werden kann oder Wärme aufgenommen werden kann. Dies hat sich im praktischen Einsatz als vorteilhaft erwiesen.

Erfindungsgemäß bietet die Konstruktion, die im Wesentlichen schichtartig ist, eine gute Modularität. So lassen sich mehrere Wasserstoff-Speicherzellen miteinander kombinieren und zusammenfügen, sodass ein Hochskalieren auf grö-ßere Einheiten ohne weiteres möglich ist. Die Speicherzellen können z.B. gestapelt werden.

Da ein großes Problem bei der Speicherung von Wasserstoff die Wärmeübertragung und die Abführung von Wärme ist, hat sich die Ausgestaltung mit einer Schicht aus Metallhydrid als vorteilhaft erwiesen, insbesondere wenn sie angedrückt oder zusammengedrückt wird. Dazu wird die Anpressplatte eingesetzt, die dazu ausgebildet ist, einen auf sie ausgeübten Druck oder eine ausgeübte Kraft an die Metallhydridschicht weiterzugeben. Zum Initiieren der Kraft und des Andrückens wird ein Kraftelement oder ein Federelement verwendet.

In einer bevorzugten Ausführungsform umfasst die Wasserstoff-Speicherzelle ein Kraftelement, das ein federndes Element ist. Das federnde Element ist bevorzugt eine Druckfeder, eine Flachfeder oder eine Spiralfeder. Die Federn können konisch sein. Bevorzugt lassen sich die Federn derart zusammendrücken, dass sie auf ein vorgegebenes Maß oder Blockmaß gestaucht werden können. Sie sind sehr kompakt und nehmen im zusammengedrückten Zustand nur einen kleinen Bauraum ein. Die Anpressplatte wird dabei von dem federnden Element gegen die Metallhydridschicht gedrückt wird.

Vorzugsweise hat die Anpressplatte ein Material, dass insoweit wasserstoff-resistent ist, dass kein Verspröden des Materials auftritt. Es eignen sich im Wesentlichen alle Materialien, die eine hinreichende Stabilität aufweisen und bei Kontakt mit Wasserstoff nicht verspröden. Das Material muss bis wenigstens 100° C temperaturstabil sein. Bevorzugt ist das Material Aluminium in einer geeigneten Legierung.

In einer bevorzugten Ausführungsform der Wasserstoff-Speicherzelle ist der Grundkörper so ausgebildet, dass er Aluminium umfasst. Beispielsweise kann er vollständig aus Aluminium gebildet sein. Bevorzugt ist eine Legierung, die Aluminium enthält als Material für den Grundkörper. Besonders bevorzugt hat sich eine Legierung aus Al Mg Si1 für den praktischen Einsatz als geeignet gebildet. Ein derartiges Aluminium entspricht der EN AW 6082. Dieses Material bietet mit 220 W/(m*K) eine 10-fach bessere Wärmeleitfähigkeit als Edelstahl. Somit kann die Wärme aus der Metallhydridschicht in den Grundkörper eingeleitet und verteilt werden.

In einer bevorzugten Ausgestaltung der Wasserstoff-Speicherzelle hat der Grundkörper eine im Wesentlichen rechteckige Grundfläche. Im Wesentlichen rechteckig bedeutet hierbei, dass die Ecken abgerundet sein können, um in der Praxis Beschädigungen am Grundkörper und seiner Außenflächen zu vermeiden und eine mögliche Verletzungsgefahr zu reduzieren. Bevorzugt ist die Grundfläche des Grundkörpers der Wasserstoff-Speicherzelle quadratisch. Die Höhe des Grundkörpers beträgt höchstens 20% der kleineren Seitenfläche des Grundkörpers. Besonders bevorzugt ist eine Höhe des Grundkörpers, die höchstens 15% der Länge der kleinsten Seitenlänge des Grundkörpers aufweist, weiter bevorzugt höchstens 10% und besonders bevorzugt höchstens 5%. Auf diese Weise wird ein recht flacher Grundkörper gebildet, sodass eine gute Wärmeableitung erfolgen kann, insbesondere weil der Abstand zwischen Metallhydridschicht und Umgebung gering ist.

Eine Wasserstoff-Speicherzelle mit einem rechteckigen Grundkörper, der deutlich breiter und länger als hoch ist, bietet die Möglichkeit, mehrere Wasserstoff-Speicherzellen zu stapeln. Eine Ausgestaltung der Speicherzelle als flacher Schichtaufbau ist bevorzugt. Auf diese Weise können nahezu beliebig viele Wasserstoff-Speicherzellen miteinander kombiniert werden. Auf diese Weise lassen sich Wasserstoffspeichereinheiten bilden, wenn diese jedenfalls fluidisch derart verschaltet sind, dass ein Gasaustausch des Wasserstoffs zwischen den einzelnen Zellen möglich ist.

In einer bevorzugten Ausführungsform weist der Grundkörper der Wasserstoff-Speicherzelle an seiner Unterseite einen Kühlraum auf, der bevorzugt als Kühlkanal ausgebildet ist. Besonders bevorzugt verläuft dieser Kühlkanal mäanderförmig. Der Kühlraum bzw. Kühlkanal ist besonders bevorzugt in dem Grundkörper an seiner Unterseite ausgebildet. Da die Metallhydridschicht nahe der Unterseite des Grundkörpers angeordnet ist, erfolgt eine gute Wärmeübertragung zwischen der Metallhydridschicht und einem Kühlmittel, was in dem Kühlkanal bzw. Kühlraum fließen kann. Kühlraum bzw. Kühlkanal sind bevorzugt einstückig in den Grundkörper der Speicherzelle integriert. Kühlraum bzw. Kühlkanal können zur Unterseite hin offen sein. Sie werden dann bevorzugt durch eine Abdichtung oder Dichtplatte verschlossen.

Vorzugsweise weist der Kühlraum einen Kühlmittel-Einlass und einen Kühlmittel-Auslass auf, die derart voneinander beabstandet sind, dass zwischen Kühlmittel-Einlass und Kühlmittel-Auslass der Kühlraum von fließendem Kühlmittel durchströmt wird. Das Kühlmittel zum Wärmeaustausch, das sowohl zum Kühlen als auch zum Heizen der Metallhydridschicht verwendet werden kann, fließt also durch den Kühlmittel-Einlass in den Kühlraum hinein und durch den Kühlmittel-Auslass wieder hinaus. Bevorzugt sind Einlass und Auslass so angeordnet, dass wenigstens 80% des Kühlraums durch ein eintretendes Kühlmittel durchströmt wird, bevor es aus dem Kühlraum wieder heraustritt. Vorzugsweise sind Kühlmittel-Einlass und Kühlmittel-Auslass im Kühlraum an entgegengesetzten Enden angeordnet. Bei einer Ausbildung als Kühlkanal befinden sich Einlass und Auslass an den jeweiligen Enden des Kühlkanals. Dies stellt sicher, dass eine möglichst große Fläche des Grundkörpers von Kühlmittel durchströmt wird und somit ein guter Wärmeaustausch erfolgen kann.

Gas-Einlass und/oder Gas-Auslass der Speicherzelle für den Wasserstoff können mit einer Filterkomponente abgedeckt werden, so dass hindurchströmendes Gas bzw. Wasserstoff gefiltert werden. Die Filterkomponente kann als separate Komponente beispielsweise ein Sintermetallfilter sein.

Das Anpresselement hat neben dem Andrücken der Metallhydridschicht an die Unterseite des Aufnahmeraums auch die Aufgabe einen Gasraum, Gasverteilraum oder Wasserstoffraum zu bilden, um das einströmende Gas, also den Wasserstoff, zu verteilen. Aus diesem Grund ist die Anpressplatte gasdurchlässig ausgebildet, so dass ein definierter Gasstrom sichergestellt wird. Um den Gasstrom zu bewirken, weist eine Anpressplatte bevorzugt mehrere Öffnungen auf, die ein Durchströmen der Platte mit Wasserstoff ermöglicht. Die Öffnungen sind bevorzugt in ihrer Größe gleich und haben eine Größe von bevorzugt wenigstens 0,1 mm, weiter bevorzugt von wenigstens 1 mm, sehr bevorzugt von wenigstens 2 mm. Vorzugsweise kann die Größe der Öffnungen oder Löcher auch begrenzt sein. Die Öffnungen haben bevorzugt eine Größe von höchstens 10 mm, weiter bevorzugt von höchstens 8 mm, besonders bevorzugt von höchstens 5 mm. In einer besonders bevorzugten Ausführung liegt die Größe der Öffnungen zwischen 0,1 mm und 5 mm.

In einer bevorzugten Ausführung sind die Öffnungen gleichmäßig oder periodisch auf der Anpressplatte verteilt. Beispielsweise können die Öffnungen in einem Raster ausgebildet sein, um die Gaseinleitung in die Metallhydridschicht zu verbessern. Das Raster der Öffnungen ist derart gestaltet, dass der Abstand zweier Öffnungen in vertikaler und horizontaler Richtung höchstens 40 mm ist. Bevorzugt ist ein Raster von höchstens 30 mm x 30 mm, also mit einem Öffnungsabstand von höchstens 30 mm in vertikaler und horizontaler Richtung, weiter bevorzugt ein Raster von höchstens 25 mm x 25 mm, weiter bevorzugt von höchstens 20 mm x 20 mm und besonders bevorzugt von höchstens 15 mm x 15 mm. Er wurde festgestellt, dass bei einer größeren Rasterung Probleme bei der Wasserstoffeinleitung in das Metallhydrid auftreten können.

Auf der anderen Seite ist die Anpressplatte so ausgebildet, dass das Metallhydrid in der Metallhydridschicht verbleibt und nicht in den Wasserstoffraum austritt. Das Metallhydrid wird durch die Anpressplatte weitgehend zurückgehalten.

Diese Wirkung kann durch ein Filterelement unterstützt werden, das bevorzugt in dem Aufnahmeraum zwischen dem Gasraum und der Metallhydridschicht angeordnet ist. Das Filterelement ist dazu ausgebildet, einen Übertritt von Material aus der Metallhydridschicht in den Gasraum wenigstens zu reduzieren, möglichst zu verhindern. Bevorzugt ist das Filterelement in Kontakt mit dem Anpresselement bzw. der Anpressplatte. Beispielsweise kann das zusätzliche Filterelement die Öffnungen der Anpressplatte derart abdecken, dass das Zurückhalten von Metallhydrid durch die Anpressplatte weiter unterstützt und verbessert wird.

In einer bevorzugten Ausführungsform ist das Filterelement eine Metallgewebeschicht, eine Papierfilterschicht, eine Kunststofffilterschicht oder eine Kombination der hier genannten Filtermöglichkeiten. Beispielsweise kann das Filterelement auf eine Seite des Anpresselements aufgebracht sein.

Der Einsatz eines Filterelements eignet sich insbesondere dann, wenn das Metallhydrid in geschütteter Form in die Metallhydridschicht eingebracht wurde. In diesem Fall kann ein Metallhydridstaub entstehen, der durch das Filterelement weitgehend zurückgehalten wird.

Alternativ und ebenfalls bevorzugt kann das Metallhydrid in Form von Pellets, zum Teil mit Additiven wie Graphit versetzt, in der Metallhydridschicht vorliegen. Diese Pelletform ist in der Regel nicht stabil und zerfällt mit der Zeit durch die Volumenarbeit des Metallhydrides. Da durch das Anpresselement und ein Kraftelement wie ein federndes Element das Metallhydrid permanent unter mechanischem Druck (> 50 N) gehalten wird, kann das Ausgangsmaterial in gepresster aber bevorzugt auch in loser Form eingebracht werden. Das Metallhydrid kann beispielsweise durch Schüttung in die Metallhydridschicht eingebracht werden, unabhängig davon, ob es als (grobes) Pulver oder in Form von Pellets vorliegt.

In einer bevorzugten Ausführungsform weist der Grundkörper einen Gas-Port für die Zufuhr und Abfuhr des Wasserstoffs auf. Der Gas-Port ist mit dem Gasraum des Aufnahmeraums verbunden. Der Gas-Port kann beispielsweise durch eine Bohrung realisiert sein. Diese Bohrung erstreckt sich durch den Grundkörper der Wasserstoff-Speicherzelle, nicht jedoch durch die Metallhydridschicht. Zwischen Bohrung des Gas-Ports und dem Gasraum kann eine vorzugsweise quer verlaufende Verbindung in Form einer Öffnung oder einer Bohrung vorgesehen sein. Alternativ ist ein sich über die Abmessungen des Aufnahmeraums hinaus erstreckender Verteilraum, in den der Gas-Port hineinragt.

In einer bevorzugten Ausführungsform umfasst der Gas-Port einen Filter. Dieser kann beispielsweise aus einem Sintermaterial gebildet sein. Möglich ist auch, den Einsatz von Partikelfiltern am Auslass der jeweiligen Speicherzelle oder am Auslass einer Wasserstoff-Speichereinheit, bei der die einzelnen Gas-Ports zusammenlaufen. Der Partikelfilter benötigt eine geeignete Porengröße, um geringe Mengen feiner Partikel, die in dem Aufnahmeraum vorhanden sein können, zurückzuhalten.

In einer bevorzugten Ausführungsform herrschen in der Wasserstoff-Speicherzelle Drücke von höchstens 100 bar, bevorzugt höchstens 50 bar, weiter bevorzugt höchstens 30 bar. Besonders bevorzugt sind Drücke für die Wasserstoff-Speicherzelle von höchstens 20 bar. In einer ebenso bevorzugten Ausführungsform können die auftretenden Drücke zwischen etwa 5 bar und 25 bar liegen. Aufgrund der geringen Drücke kann Aluminium als Material für die Wasserstoff-Speicherzellen bevorzugt eingesetzt werden.

Eine aus mehreren Wasserstoff-Speicherzellen gebildete Wasserstoff-Speichereinheit sieht beispielsweise vor, dass die einzelnen Speicherzellen gestapelt sind. Sie sind also übereinander angeordnet.

Die Wasserstoff-Speichereinheit hat eine obere Endplatte, die bevorzugt die obere Wasserstoff-Speicherzelle abdeckt. Die Deckschicht zum Verschließen des Aufnahmeraums kann durch diese obere Endplatte gebildet werden. Vorzugsweise ist zwischen dem Grundkörper der Wasserstoff-Speicherzelle und der oberen Endplatte eine Dichtung eingefügt. Beim Stapel mehrerer Wasserstoff-Speicherzellen kann die Deckschicht auch zum Verschließen eines optionalen offenen Kühlkanals an der Unterseite verwendet werden.

Eine untere Endplatte der Wassersstoff-Speichereinheit deckt die Unterseite des Grundkörpers der Wasserstoff-Speicherzelle ab. Dies ist insbesondere dann geeignet, wenn der Kühlraum an der Unterseite des Grundkörpers nach unten hin offen ist. Der Kühlraum bzw. Kühlkanal wird dann durch die Endplatte verschlossen. Die untere Endplatte kann gleichzeitig als Sockel oder als Ständer dienen.

Die obere Endplatte weist Anschlüsse für Kühlmittel auf, um das Kühlmittel bevorzugt zu dem Kühlmittel-Einlass und Kühlmittel-Auslass der Speicherzellen zuzuführen. Die Anschlüsse für Kühlmittel fluchten bevorzugt mit den Kühlmittel-Einlässen und Kühlmittel-Auslässen. Die Kühlmittel-Einlässe und Kühlmittel-Auslässe der jeweiligen Wasserstoff-Speicherzellen können miteinander verbunden sein, so dass an der oberen Endplatte ein Anschluss für Kühlmittel vorgesehen sein kann, durch den alle Wasserstoff-Speicherzellen versorgt werden können.

Die obere Endplatte weist auch einen Gasanschluss für Wasserstoff auf, der bevorzugt mit dem Gas-Port der oberen Wasserstoff-Speicherzelle verbunden ist. Auf diese Weise gelangt Wasserstoff in die obere und bevorzugt durch weitere Verbindungen zwischen den einzelnen Speicherzellen in alle Speicherzellen. Der Gasanschluss fluchtet bevorzugt mit den Gas-Ports der Speicherzellen.

In einer bevorzugten Ausführungsform der Wasserstoff-Speichereinheit hat der Grundkörper eine im Wesentlichen quadratische Grundfläche, wobei die Höhe des Grundkörpers der einzelnen Wasserstoff-Speicherzellen so dimensioniert ist, dass eine Wasserstoff-Speichereinheit mit 10 Wasserstoff-Speicherzellen, einer oberen Endplatte und einer unteren Endplatte einen Würfel bildet. Eine derartige Wasserstoff-Speichereinheit hat also die Form eines Würfels. Alternativ und bevorzugt sind die einzelnen Wasserstoff-Speicherzellen so dimensioniert ist, dass eine Wasserstoff-Speichereinheit mit 10 Wasserstoff-Speicherzellen ohne Endplatten die Form eines Würfels hat.

Die Erfindung wird nachfolgend anhand einiger ausgewählter Ausführungsbeispiele im Zusammenhang mit den beiliegenden Zeichnungen näher beschrieben und erläutert. Es zeigen:
- Figur 1: einen prinzipiellen Aufbau einer Wasserstoff-Speicherzelle im Schnitt;
- Figur 2: eine Wasserstoff-Speicherzelle in einer Ansicht von oben und unten;
- Figur 3: eine Wasserstoff-Speichereinheit mit 10 Wasserstoff-Speicherzellen;
- Figur 4: eine Detailzeichnung der Wasserstoff-Speichereinheit aus Figur 3;
- Figur 5: eine würfelförmige Wasserstoff-Speichereinheit mit 10 Wasserstoff-Speicherzellen; und
- Figur 6: mehrere Ausführungsformen von Wasserstoffeinheiten, die modular aufgebaut und zu einer größeren Einheit verkoppelt sind.

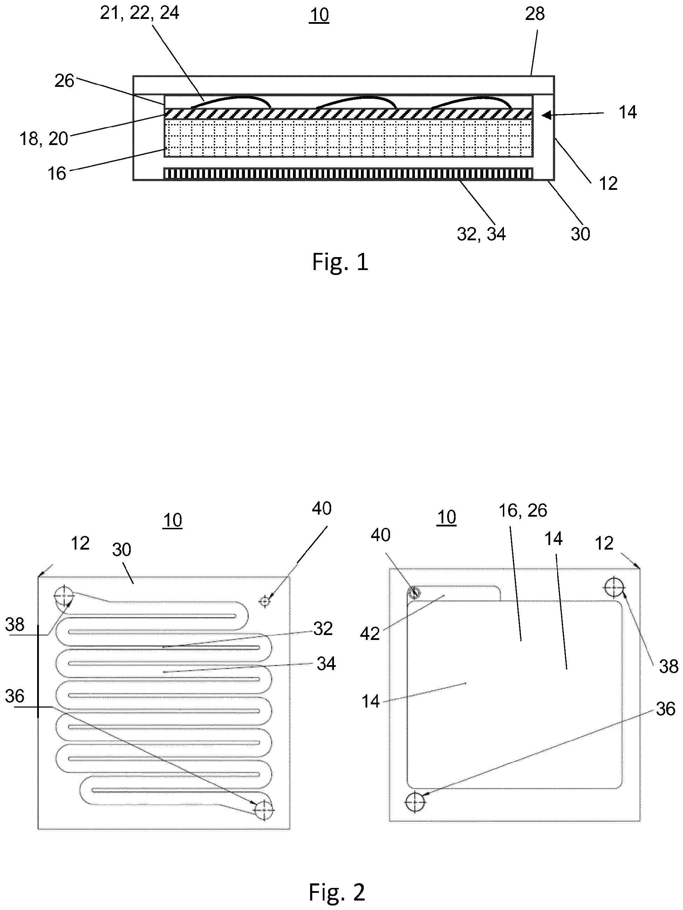

Figur 1 zeigt den prinzipiellen Aufbau einer Wasserstoff-Speicherzelle 10 mit einem Grundkörper 12, der einen offenen Aufnahmeraum 14 aufweist. Derwannenförmige Aufnahmeraum 14 ist nach oben offen. In dem Aufnahmeraum 14 ist eine Metallhydridschicht 16 angeordnet, die eingebrachtes Metallhydrid in gepresster oder loser Form umfasst. Oberhalb der Metallhydridschicht 16 ist ein Anpresselement 18 angeordnet, das Kontakt zur Metallhydridschicht hat und eine Kraft auf die Metallhydridschicht 16 überträgt. Das Anpresselement 18 ist als Anpressplatte 20 ausgebildet und ist in dem Aufnahmeraum 14 beweglich. Die auf die Anpressplatte 20 wirkende Kraft wird von einem Kraftelement 21 erzeugt. Das Kraftelement 21 ist ein federndes Element 22. Es ist durch mehrere Flachfedern 24 gebildet. Oberhalb des Anpresselements 18 ist ein Gasraum 26 gebildet, der Teil des Aufnahmeraums 14 ist. Der Gasraum 26, der auch als Wasserstoffraum bezeichnet wird, dient zum Verteilen des in die Wasserstoffspeicherzelle 10 einströmenden Wasserstoffs in die Metallhydridschicht 16. Der Gasraum 26 ist in seinem Volumen derart variabel, dass seine Größe bei einem Ausdehnen der Metallhydridschicht 16 schrumpft und seine Größe mittels des Kraftelements 21 bzw. der federnden Elemente 22 wächst, wenn sich das Volumen der Metallhydridschicht 16 verkleinert.

Der im Querschnitt U-förmig ausgebildete Grundkörper 12 und der sich darin erstreckende Aufnahmeraum 14 werden durch eine Deckschicht 28 nach oben hin verschlossen.

Figur 2 zeigt den Grundkörper 12 der Wasserstoff-Speicherzelle 10 von oben (rechts) und von unten (links). An einer Unterseite 30 des Grundkörpers 12 ist ein Kühlraum 32 in Form eines mäanderförmig ausgebildeten Kühlkanals 34 vorgesehen. Der Kühlkanal 34 ist in die Unterseite des Grundkörpers eingebracht und nach unten hin offen, sodass seine offene Seite mit der Unterseite 30 des Grundkörpers 12 abschließt. Somit kann der Kühlkanal 34 durch Aufbringen einer Abdeckplatte oder Deckschicht 28 verschlossen werden. An den beiden Enden des Kühlkanals 34 ist ein Zugang vorgesehen, wobei der eine Einlass als Kühlmittel-Einlass 36 und der andere als Kühlmittel-Auslass 38 dient. Die beiden Zugänge sind bevorzugt in zwei diagonal zueinander liegenden Ecken auf dem Grundkörper angeordnet. Auf diese Weise kann Kühlmittel den Kühlkanal 34 durchströmen.

Ein Gas-Port 40 ist an der Unterseite 30 und an der Oberseite der Speicherzelle zu erkennen. Er erstreckt sich durch den Grundkörper 12 in Form einer Bohrung. Der Gas-Port 40 kann optional ein Filterelement umfassen oder mit einem Filterelement verbunden oder in Kontakt sein, um einen Austritt von Metallhydrid zu verhindern. Der Gas-Port 40 ist fluidisch mit dem Gasraum 26 verbunden, der eine Verteiltasche 42 aufweist, sodass einströmender Wasserstoff über die Verteiltasche 42 in den Gasraum 26 gelangen kann. Der Gasraum 26 mit seiner Verteiltasche 42 ist somit flächenmäßig größer als der Teil des Aufnahmeraums 14, in dem die Metallhydridschicht 16 angeordnet ist. Auf diese Weise kann sich der Gas-Port 40 durch den Grundkörper 12 erstrecken und eine Verbindung zum Gasraum 26 herstellen, ohne direkt durch die Metallhydridschicht 16 zu verlaufen.

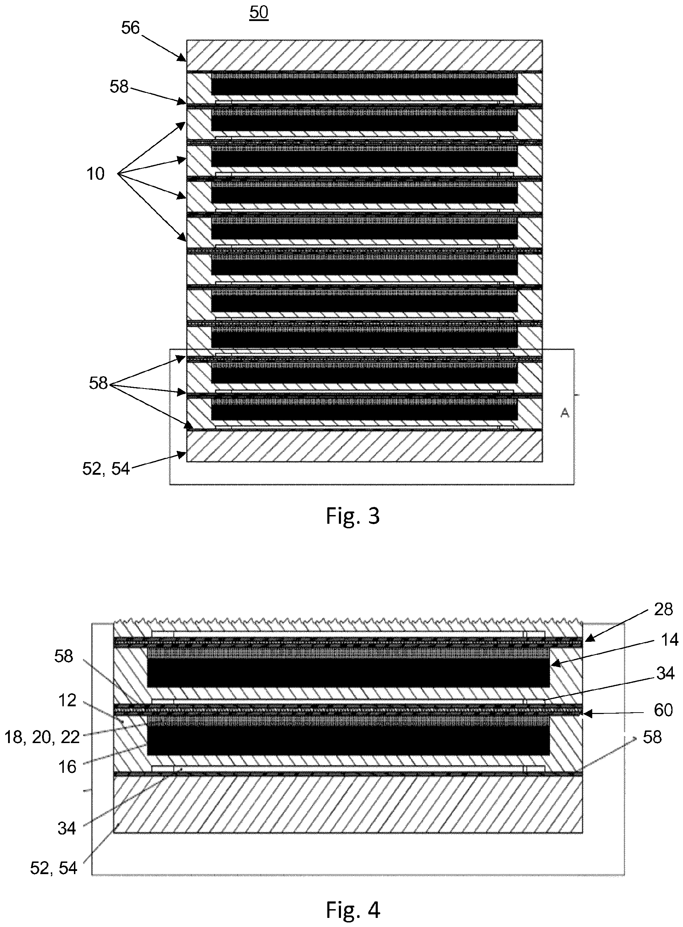

Figur 3 zeigt einen Schnitt durch einen Wasserstoff-Speichereinheit 50, die aus 10 Wasserstoff-Speicherzellen 10 gebildet wird. Die Wasserstoff-Speicherzellen 10 werden nach unten hin mit einer unteren Endplatte 52 in Form eines Sockels 54 begrenzt. Am oberen Ende werden die Wasserstoff-Speicherzellen 10 mittels einer oberen Endplatte 56 abgedeckt und begrenzt. Zwischen den jeweiligen Wasserstoff-Speicherzellen 10 sind Abdichtungen 58 vorgesehen, damit zum einen eine Abdichtung der Kühlkanäle 34 und zum anderen eine Abdichtung des Aufnahmeraums 14 erfolgen kann.

Eine Detailansicht in der Wasserstoff-Speichereinheit 50 ist in Figur 4 dargestellt. Hierbei ist die untere Endplatte 52 sowie zwei sich nach oben anschließende Wasserstoff-Speicherzellen 10 gezeigt. Die untere Endplatte 52 ist abgedeckt mit der Abdichtung 58, die den Kühlkanal 34 der darüber liegenden Wasserstoff-Speichereinheit 50 abdichtet. Der Kühlkanal 34 ist in die Unterseite 30 des Grundkörpers 12 eingelassen. In dem Aufnahmeraum ist eine Metallhydridschicht 16 angeordnet, um den Wasserstoff in dem darin enthaltenen Metallhydrid aufzunehmen. Die Metallhydridschicht 16 ist nahe des Kühlkanals 34 angeordnet, sodass ein guter und aufgrund der rechteckigen Grundfläche des Grundkörpers 12 großflächiger Wärmeaustausch erfolgen kann.

Oberhalb der Metallhydridschicht ist das Anpresselement 18 mit Anpressplatte 20 gezeigt, das auf die Metallhydridschicht 16 drückt. Dies hat den Vorteil, dass das Metallhydrid auch in Form einer losen Schüttung in die Metallhydridschicht eingebacht werden kann, da die lose Schüttung über das Anpresselement 18 zusammengedrückt wird. Das Anpresselement 18 umfasst ein federndes Element 22, das hier nicht sichtbar ist, aber für den Anpressdruck in Richtung Metallhydridschicht 16 sorgt.

Eine Dichtung 60 ist oberhalb des Anpresselements 18 angeordnet und dichtet den Aufnahmeraum 14 ab. Diese Dichtung 60 liegt auf der Oberseite des Grundkörpers 12 an.

Eine Deckschicht 28 verschließt den Grundkörper 12 und dessen Aufnahmeraum 14 nach oben hin. Oberhalb der Deckschicht 28 ist die Abdichtung 58 angeordnet, die den Kühlkanal 34 der darüber liegenden Wasserstoff-Speicherzelle 10 verschließt und abdichtet.

Aufgrund der Einlagerung des Wasserstoffs innerhalb des Metallhydrids der Metallhydridschicht 16 ist der vorherrschende Druck um den Faktor 10 geringer als bei herkömmlichen Druckspeichern. Dies ermöglicht eine rechteckige Bauform des Grundkörpers 12, wie hier gezeigt. Durch das integrierte Thermomanagement lassen sich weiterhin unerwünschte und durch Temperaturänderungen verursachte Druckspitzen beim Be- und Entladen mit Wasserstoff reduzieren. Darüber hinaus weist die rechteckige Bauform eine gegenüber zylinderförmigen Speichern höhere volumetrische Packungsdichte auf. Im Vergleich ist diese Packungsdichte bei zylindrischen, aneinandergereihten Drucktanks etwa 22% geringer.

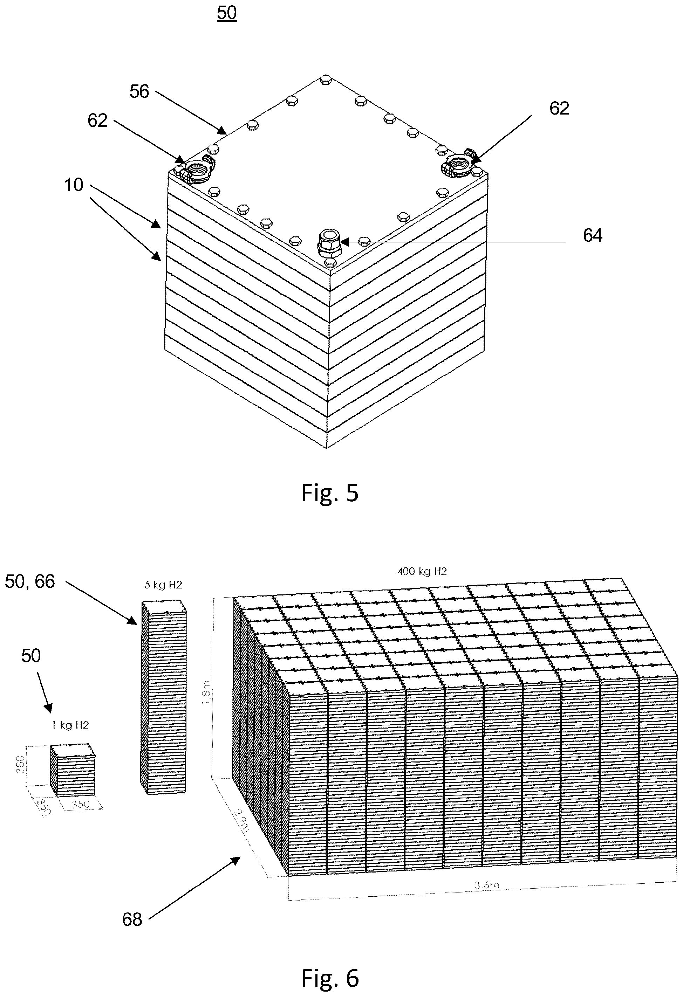

Figur 5 zeigt eine Wasserstoff-Speichereinheit 50 mit mehreren Wasserstoff-Speicherzellen 10, die als kubischer Block ausgebildet ist. In der perspektivischen Ansicht ist deutlich zu erkennen, dass in der oberen Endplatte 56 zwei Anschlüsse 62 für Kühlmittel vorgesehen sind. Mittels dieser Anschlüsse 62 werden die Kühlkanäle der einzelnen Wasserstoff-Speicherzellen 10 mit einem Kühlmittel zum Wärmetausch versorgt und durchströmt. Ein Gas-Anschluss 64 für Wasserstoff in einer dritten Ecke der oberen Endplatte 56 steht mit den Gas-Ports der Wasserstoff-Speicherzellen 10 in Verbindung, so dass die einzelnen Wasserstoff-Speicherzellen 10 mit Wasserstoff versorgt werden. Mittels des Gas-Anschlusses 64 findet sowohl ein Beladen als auch ein Entladen der einzelnen Speicherzellen der Wasserstoff-Speichereinheit 50 mit Wasserstoff statt.

Die in der vorliegenden Erfindung beschriebenen Wasserstoff-Speicherzelle 10 hat bevorzugt eine Kapazität von 100 g H2. Dies entspricht 5,5 kg Metallhydrid und stellt bevorzugt die kleinstmögliche Speichergröße dar für eine derartige Konstruktion.

In Figur 6 sind mehrere Ausführungsformen von Wasserstoff-Speichereinheiten 50 gezeigt, die modular aus mehreren Wasserstoff-Speicherzellen 10 gebildet werden. Dies ist möglich, da die Wasserstoff-Speicherzellen 10 nahezu beliebig miteinander kombiniert werden können, sodass beliebig große Speichereinheiten entstehen können.

Die kleinste Form einer bevorzugten Ausführungsform der Wasserstoff-Speichereinheit 50 bildet ein Kubus. Diese Speichereinheit kann 1 kg H2 aufnehmen. Seine Grundfläche beträgt 35 × 35 cm². Die Höhe der Wasserstoff-Speichereinheit 50 ist 38 cm. Die Höhe der einzelnen Wasserstoff-Speicherzellen beträgt dabei bevorzugt 3,5 cm, sodass durch die obere Endplatte und die untere Endplatte leicht von der rein kubischen Form abgewichen wird.

Eine größere, ebenso bevorzugte Ausführungsform der Wasserstoff-Speichereinheit 50 umfasst mehrere Wasserstoff-Speicherzellen 10. Diese als Tower 66 ausgeführte Wasserstoff-Speichereinheit 50 hat eine Höhe von ca. 1,8 m und eine Kapazität von 5 kg H2. Der Tower 66 wird durch einfaches Hochskalieren der Anzahl der Wasserstoff-Speicherzellen 10 gebildet.

Eine typische Ausführungsform einer Speicherbank 68 wird aus einer Vielzahl von aneinandergereihten Towern 66 gebildet. In der hier gezeigten Ausführungsform sind 80 towerförmige Wasserstoff-Speichereinheiten 50 miteinander zusammengeschaltet in Form von 8 x 10 Towern 66. Hierdurch kann auf einer Grundfläche von ca. 2,9 m x 3,6 m eine Speicherbank 68 gebildet werden, die eine Kapazität von 400 kg H2 hat. Die oben liegenden Anschlüsse für Kühlmittel 62 und Gas-Anschlüsse 64 ermöglichen eine einfache Integration der Speicherbank 68 in einen Kühlkreislauf. Das Kühl- und Thermomanagement kann extern angeordnet sein.

Da die Ausgestaltung einer Speicherbank 68 durch einfaches Aneinanderreihen der Tower 66 von Wasserstoff-Speichereinheiten 50 erfolgt, kann die Aufstellfläche der Speicherbank 68 an die örtlichen Platzverhältnisse unkompliziert angepasst werden. Ein weiterer Vorteil der Modularität besteht darin, dass im Fehlerfall einzelne Tower 66 oder Wasserstoff-Speichereinheiten 50 im laufenden Betrieb getauscht werden können.

In der Praxis hat es sich als vorteilhaft erwiesen, den notwendigen Kühlmittelfluss durch die einzelnen Wasserstoff-Speicherzellen 10 an die Lade- und Entladerate des Wasserstoffs anzupassen. So hat sich im Rahmen der Erfindung ergeben, dass ein Durchfluss von 0,022 Liter/Minute je Wasserstoff-Speicherzelle 10 bei einer kompletten Befüllung von 0 bis 100% in 30 Minuten vorteilhaft ist. Kühlkanäle, Anschlüsse, Gas-Ports, Ein- und Auslässe sind entsprechend zu dimensionieren. Grundlage der Berechnung ist die Reaktionsenthalpie des Metallhydrids, der Absorption (Befüllung) mit -18,5 kJ/mol H2 und einer Reaktionsenthalpie der Desorption (Entladung) mit 24 kJ/mol H2. Zusätzlich kann eine von der Umgebungstemperatur abhängige, passive Kühlung erfolgen, die durch die Materialwahl der Grundkörper 12 der Wasserstoff-Speicherzellen 10 positiv beeinflusst werden kann.

Dabei hat sich die Verwendung einer Aluminiumlegierung für den Grundkörper 12 als positiv gezeigt, sodass die benötigte Kühlleistung durch die geeignete Materialwahl weiter reduziert werden kann. Die notwendige Wärme zur Desorption kann entweder durch einen angeschlossenen Wärmetauscher oder eine Wärmepumpe eingebracht werden. Es besteht die Möglichkeit, den Kühlkreislauf direkt mit dem Kühlkreislauf eines Verbrauchers zu koppeln. Eine derartige Kopplung bewirkt eine Steigerung des Systemwirkungsgrads, da bei passender Dimensionierung keine externe Energie zur Temperierung des Wasserstoffspeichers und zur Kühlung des Verbrauchers benötigt wird. Die Temperierung des Speichers kann mit örtlichen Wärmequellen und Wärmesenken beispielsweise gekoppelt werden.

Der in Figur 6 gezeigte Tower 66, der für eine Speicherung von 5 kg H2 geeignet ist, hat eine volumetrische Speicherdichte von 0,76 kWh/l. Die bevorzugte Ausführungsform der Wasserstoff-Speichereinheit 50 in Form eines Towers 66 mit den Maßen 0,35 m x 0,35 m x 1,8 m und einer gravimetrischen Energiedichte von Wasserstoff mit Hi = 33,33 kWh/kg hat einen Energieinhalt von insgesamt 166,65 kWh. Damit liegt der Wasserstoff-Speicher bei der volumetrischen Energiedichte im Bereich von modernen Lithium-Ionen-Speichern, welche eine Energiedichte von ca. 0,5 kWh/l haben.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Bezugszeichen in den Patentansprüchen sind nicht einschränkend zu verstehen.

## Patentansprüche

1. Wasserstoff-Speicherzelle zum Speichern von Wasserstoff in einem Metallhydrid umfassend
- einen Grundkörper (12) mit einem nach oben offenen, wannenförmig ausgebildeten Aufnahmeraum (14);
- eine Deckschicht (28) zum Verschließen des Aufnahmeraums (14);
- eine Metallhydridschicht (16) im Aufnahmeraum (14);
- ein als Anpressplatte (20) ausgebildetes Anpresselement (18) mit Kontakt zu der Metallhydridschicht (16),
- wobei die Anpressplatte (20) eine Kraftwirkung auf die Metallhydridschicht (16) ausübt;
- ein im Aufnahmeraum (14) gebildeter Gasraum (26) zur Aufnahme von Wasserstoff, wobei der Gasraum (26) durch die Anpressplatte (20) von der Metallhydridschicht (16) getrennt ist,
- wobei die Anpressplatte (20) derart gasdurchlässig ausgebildet ist, dass ein vordefinierter Gasstrom zwischen dem Gasraum (26) und der Metallhydridschicht (16) ermöglicht wird.

2. Wasserstoff-Speicherzelle nach Anspruch 1, **dadurch gekennzeichnet, dass** die Wasserstoff-Speicherzelle ein Kraftelement (21) umfasst, das eine nicht vernachlässigbare Kraft derart auf die Anpressplatte (20) bewirkt, dass die Anpressplatte (20) eine Kraftwirkung auf die Metallhydridschicht (16) ausübt, wobei die Kraft bevorzugt wenigstens 100 N, weiter bevorzugt wenigstens 200 N, weiter bevorzugt wenigstens 400 N, weiter bevorzugt wenigstens 600 N, weiter bevorzugt wenigstens 800 N, weiter bevorzugt wenigstens 1000 N, weiter bevorzugt wenigstens 1500 N, besonders bevorzugt wenigstens 2000 N beträgt.

3. Wasserstoff-Speicherzelle nach dem vorhergehenden Anspruch, **dadurch gekennzeichnet, dass** das Kraftelement (21) ein federndes Element (22) ist, bevorzugt eine Druckfeder, eine Flachfeder oder eine Spiralfeder, weiter bevorzugt eine konische Druckfeder oder eine konische Spiralfeder, besonders bevorzugt eine Feder, die auf ein vorgegebenes Blockmaß zusammenstauchbar ist.

4. Wasserstoff-Speicherzelle nach einem der vorhergehenden Ansprüche, **dadurch gekennzeichnet, dass** die Anpressplatte (20) mehrere Öffnungen umfasst, die ein Durchströmen der Anpressplatte (20) mit Wasserstoff ermöglichen, wobei die Öffnungen bevorzugt eine Größe von wenigstens 0,1 mm, weiter bevorzugt von wenigstens 1 mm, sehr bevorzugt von wenigstens 2 mm haben und/oder bevorzugt eine Größe von höchstens 10 mm, weiter bevorzugt von höchstens 8 mm, besonders bevorzugt von höchstens 5 mm haben und/oder die Größe der Öffnungen zwischen 0,1 mm und 5 mm liegt.

5. Wasserstoff-Speicherzelle nach dem vorhergehenden Anspruch, **dadurch gekennzeichnet, dass** die Öffnungen in einem Raster angeordnet sind, um die Gaseinleitung in die Metallhydridschicht zu verbessern, wobei das Raster der Öffnungen höchstens 30 mm x 30 mm ist, bevorzugt höchstens 25 mm x 25 mm, weiter bevorzugt höchstens 20 mm x 20 mm, besonders bevorzugt höchstens 15 mm x 15 mm.

6. Wasserstoff-Speicherzelle nach einem der vorhergehenden Ansprüche, **dadurch gekennzeichnet, dass** die Anpressplatte (20) ein Material umfasst, dass insoweit wasserstoffresistent ist, dass kein Verspröden des Materials auftritt, und das Material bis wenigstens 100° C temperaturstabil ist, wobei das Material bevorzugt Aluminium in einer geeigneten Legierung umfasst, besonders bevorzugt eine Legierung aus Al Mg Si1.

7. Wasserstoff-Speicherzelle nach einem der vorhergehenden Ansprüche, **dadurch gekennzeichnet, dass** der Grundkörper (12) eine im Wesentlichen rechteckige Grundfläche aufweist, bevorzugt eine quadratische Grundfläche, wobei die Höhe des Grundkörpers (12) höchstens 20 % der kleineren Seitenlänge des Grundkörpers (12) beträgt, bevorzugt höchstens 15 %, weiter bevorzugt höchstens 10 %, besonders bevorzugt höchstens 5 %.

8. Wasserstoff-Speicherzelle nach einem der vorhergehenden Ansprüche, **dadurch gekennzeichnet, dass** der Grundkörper (12) an seiner Unterseite (30) einstückig einen integrierten Kühlraum (32) aufweist, der bevorzugt ein Kühlkanal (34) ist und besonders bevorzugt mäanderförmig verläuft.

9. Wasserstoff-Speicherzelle nach dem vorhergehenden Anspruch, **dadurch gekennzeichnet, dass** der Kühlraum (32) einen Kühlmittel-Einlass (36) und einen Kühlmittel-Auslass (38) aufweist, die von einander derart beabstandet sind, dass zwischen Kühlmittel-Einlass (36) und Kühlmittel-Auslass (38) der Kühlraum (32) von einfließendem Kühlmittel durchströmt wird, bevorzugt zu wenigstens 80 %, wobei bevorzugt der Kühlmittel-Einlass (36) und Kühlmittel-Auslass (38) im Kühlraum (32) an entgegengesetzten Enden angeordnet sind

10. Wasserstoff-Speicherzelle nach einem der vorhergehenden Ansprüche, **dadurch gekennzeichnet, dass** in dem Aufnahmeraum (14) ein Filterelement zwischen dem Gasraum (26) und der Metallhydridschicht (16) angeordnet ist, um einen Übertritt von Material der Metallhydridschicht (16) in den Gasraum (26) wenigstens zu reduzieren, wobei bevorzugt das Filterelement an der Anpressplatte (20) anliegt und mit diesem in Kontakt steht.

11. Wasserstoff-Speicherzelle nach einem der vorhergehenden Ansprüche, **dadurch gekennzeichnet, dass** der Grundkörper (12) einen Gas-Port (40) für die Zufuhr und Abfuhr des Wasserstoffs aufweist, der mit dem Gasraum (26) des Aufnahmeraums (14) verbunden ist, wobei der Gas-Port (40) bevorzugt einen Filter umfasst, besonders bevorzugt einen Filter aus Sintermetall.

12. Wasserstoff-Speichereinheit zum Speichern von gasförmigem Wasserstoff mit mehreren Wasserstoff-Speicherzellen (10), die fluidisch derart zusammengeschaltet sind, dass eine Gas- und Kühlmittelversorgung der Speicherzellen (10) möglich ist, wobei die Speicherzellen (10) übereinandergestapelt sind; und die Wasserstoff-Speichereinheit (50) eine obere Endplatte (56) und eine untere Endplatte (52), die ein Sockel (54) sein kann, aufweist, wobei die obere Endplatte (56) Anschlüsse (62) für Kühlmittel und einen Gasanschluss (64) für Wasserstoff hat.

13. Wasserstoff-Speichereinheit nach dem vorhergehenden Anspruch, **dadurch gekennzeichnet, dass** die Wasserstoff-Speicherzellen (10) nach einem der vorhergehenden Ansprüche ausgebildet sind.

14. Wasserstoff-Speichereinheit nach einem der Ansprüche 12 oder 13, **dadurch gekennzeichnet, dass** die Wasserstoff-Speicherzellen (10) einen Grundkörper (12) mit einem oben offenen Aufnahmeraum (14) und eine Deckschicht (28), die den Aufnahmeraum verschließt, umfassen, wobei in einer Unterseite (30) des Aufnahmeraums (14) ein offener Kühlkanal (34) angeordnet und integriert ist, der von der Deckschicht (28) einer benachbarten Wasserstoff-Speicherzelle (10) verschlossen ist.

15. Wasserstoff-Speichereinheit nach einem der Ansprüche 12 bis 14, **dadurch gekennzeichnet, dass** der Grundkörper (12) eine im Wesentlichen quadratische Grundfläche hat und die Höhe des Grundkörpers (12) so dimensioniert ist, dass eine Wasserstoff-Speichereinheit (50) mit 10 Wasserstoff-Speicherzellen (10), einer oberen Endplatte (56) und einer unteren Endplatte (52) einen Würfel bildet.
